# EUROPEAN PATENT SPECIFICATION

(11) **EP 3 511 635 B1**
(45) Date of publication and mention of the grant of the patent: **07.09.2022**
(21) Application number: 18184018.2
(22) Date of filing: 17.07.2018
(51) Int. Cl.: F24D 19/10, F16H 25/20, F16K 31/04, G05D 23/19, F16K 31/50, F16K 31/53

(54) **PUSH PIN BEARING MECHANISM FOR ACTUATORS**
SCHUBBOLZENLAGERMECHANISMUS FÜR AKTUATOREN
MÉCANISME DE PALIER DE BROCHE DE POUSSÉE POUR DES ACTIONNEURS

(30) Priority: 12.01.2018 US 201815869859; 11.06.2018 EP 18176952
(43) Date of publication of application: 17.07.2019
(73) Proprietor: Computime, Ltd., Wanchai (HK)
(72) Inventor: CHAN, Dick Kwai, Wanchai (HK); HA, Wai-Leung, Wanchai (HK); TAN, Ben Ren, Wanchai (HK); YILMAZ, Hamza, Wanchai (HK)
(74) Representative: Serravalle, Marco

(56) References cited:
- EP-A1- 0 923 013
- EP-A1- 3 073 205
- WO-A1-2015/036332
- DE-A1-102013 016 545
- DE-C2- 3 153 654
- KR-B1- 101 604 415

## Description

### TECHNICAL FIELD

Aspects of the invention relate to a ball bearing assembly that prevents rotation of a push pin, thus substantially reducing erosion of a mating manifold pin when the push pin and the manifold pin are in contact.

### BACKGROUND

A thermostatic radiator valve (TRV) is a self-regulating valve fitted to a hot water heating system radiator, to control the temperature of a room by changing the flow of hot water through the radiator. However, with traditional approaches, a TRV may incur erosion to internal components, thus causing improper operation of the TRV.

WO 2015/036332 discloses a cam gear for use in a linear drive device for transforming a rotational movement of a first component into a linear movement of a second component.

DE102013016545 discloses a radiator valve for use with an electromechanical actuator. In order to use an actuator with a lower energy consumption, the radiator valve is designed without a biasing spring. The coupling between actuator and radiator valve can transmit both tensile and compressive forces.

EP 3 073 205 discloses a method for operating a hydronic heating and/or cooling system wherein the hydronic heating and/or cooling system comprises multiple temperature zones; wherein each temperature zone comprises a heat exchanger with a liquid heating/cooling medium and air flowing through the heat exchanger; wherein each temperature zone comprises a temperature sensor for measuring an actual value of a zone air temperature; wherein each temperature zone comprises a control valve controlling the flow of the liquid heating/cooling medium through the heat exchanger in such a way that the actual value of the zone air temperature is adjusted to a target value of the zone air temperature.

### BRIEF DESCRIPTION OF THE DRAWINGS

The present disclosure is illustrated by way of example and not limited in the accompanying figures in which like reference numerals indicate similar elements and in which:
Figure 1 shows a thermostatic radiator valve (TRV) with a rotating push pin in accordance with prior art.
Figure 2 shows a push pin bearing mechanism according to one or more aspects of the present invention,
Figure 3 shows a ball bearing assembly used by the push pin bearing mechanism shown in Figure 2 according to one or more aspects of the invention.
Figure 4 shows a three-dimensional composite of the push pin bearing mechanism shown in Figures 2 and 3 according to one or more aspects of the invention.
Figure 5 shows the push pin bearing mechanism incorporated in an automatic temperature balanced actuator (ABA) application according to one or more aspects of the invention. .
Figure 6 shows the push pin bearing mechanism incorporated in a thermostatic radiator valve (TRV) application according to one or more aspects of the invention.
Figure 7 shows a control circuit for controlling a motor of a push pin bearing mechanism according to one or more aspects of the invention.

### SUMMARY OF INVENTION

The following presents a simplified summary of various aspects described herein. This summary is not an extensive overview, and is not intended to identify key or critical elements or to delineate the scope of the claims. The following summary merely presents some concepts in a simplified form as an introductory prelude to the more detailed description provided below.

In one embodiment in accordance with the invention, a bearing assembly prevents rotation of push pin, thus substantially reducing wear (erosion) of the mating manifold pin when the push pin and the manifold pin are in contact. Linear movement of the push pin moves the manifold pin to position a valve in a manifold assembly.

According to the invention a push pin bearing assembly comprises a housing, a motor gear, a coupling gear, a bearing assembly, a tube, and a push pin. The coupling gear is screwed into the housing and coupled to the motor gear in order to transfer the rotational movement from the motor gear to the coupling gear. The push pin is inserted to the bearing assembly and fixed onto the tube, where the push pin moves in a linear direction responsive to the rotational movement of the coupling gear and is capable of being in contact with a manifold pin. The bearing assembly prevents the rotational movement from being transferred to the push pin when the push pin is in contact with the manifold pin.

According to the invention, a bearing assembly comprises an upper plate, lower plate, and middle plate situated between the upper and lower plates and retaining a plurality of bearings. The upper plate and the middle plate are capable of rotating with a coupling gear of a push pin bearing assembly while the lower plate and the push pin are stationary with respect to the manifold pin when the push pin and the manifold pin are in contact with each other.

With another aspect, a push pin bearing assembly is applied to an automatic temperature balanced actuator (ABA) application.

With another aspect, a push pin bearing assembly is applied to a thermostatic radiator valve (TRV) application.

These and additional aspects will be appreciated with the benefit of the disclosures discussed in further detail below.

### DETAILED DESCRIPTION

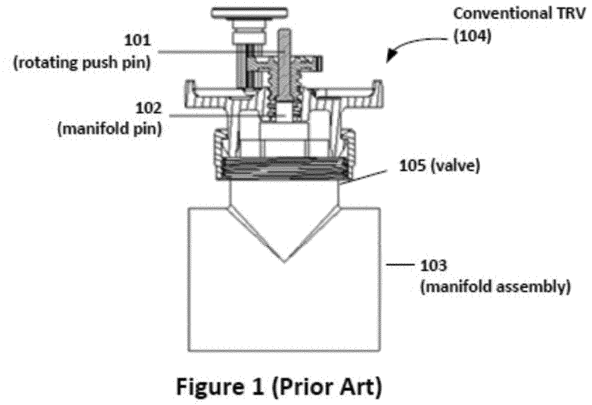

Figure 1 shows a thermostatic radiator valve (TRV) 104 that controls a manifold assembly 103 according to traditional approaches. Traditional TRV 104 may comprise push pin 101 that typically causes erosion (for example, wear due to friction) to manifold pin 102 when in contact while push pin 101 is rotating. Similar traditional approaches may be used for other applications such as an automatic temperature balanced actuator (ABA).

According to an aspect of the embodiments, as will be discussed, a bearing assembly prevents rotation of push pin, thus substantially reducing wear (erosion) of the mating manifold pin when the push pin and the manifold pin are in contact.

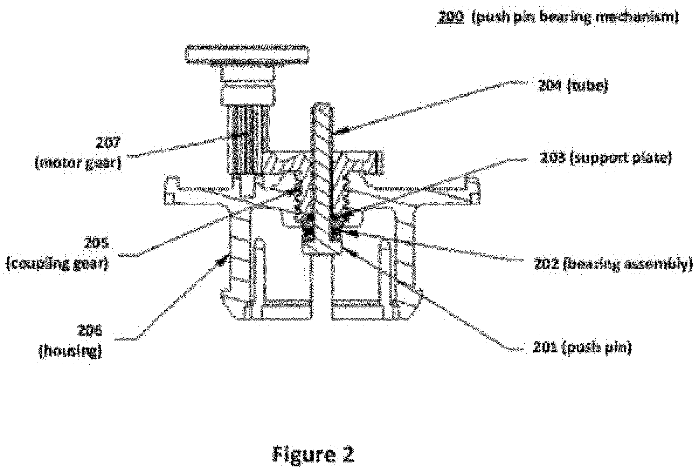

Figure 2 shows a push pin bearing mechanism 200 according to one or more aspects of the present invention. Mechanism 200 comprises push pin 201, ball bearing assembly 202, support plate 203, tube 204, coupling gear 205, housing 206, and motor gear 207. As will be discussed in further detail, push pin bearing mechanism 200 substantially prevents rotational motion from being transferred to push pin 201.

Push pin 201 may move a manifold pin (not explicitly shown) when in contact. The manifold pin, in turn, may position a valve to control liquid (fluid) flow through a manifold assembly, thus controlling energy transferred to an associated radiator.

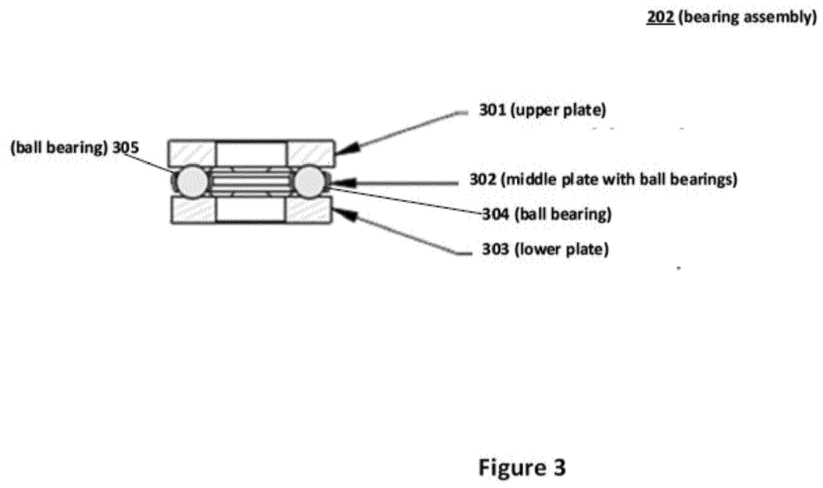

Figure 3 shows bearing assembly 202 used by push pin bearing mechanism 200, as shown in Figure 2, according to one or more aspects of the invention. Bearing assembly 202 comprises upper plate 301, middle plate 302 and lower plate 303. With some embodiments, middle plate 302 retains a plurality of ball bearings including ball bearings 304 and 305. However, some embodiments may incorporate a different type of bearing including a roller bearing, jewel bearing, fluid bearing, magnetic bearing, and the like.

With an aspect of the invention, retainers for balling bearings 304 and 305 may be formed from middle plate 302 (such as when middle plate 302 is stamped during a manufacturing process), where the bearing retainer is an integral part of middle plate 302.

Referring to Figure 2, while tube 204 is pressed fit onto helical gear 205, the fittings between tube 204 and push pin 201 and between ball bearing assembly 202 and push pin 201 allow for upward or downward movement (which may be referred as linear movement) of push pin 201 responsive to the rotation of coupling gear 205. However, ball bearing assembly 202 prevents rotational movement from being transferred to push pin 201 as soon as push pin 201 contacts with the manifold pin (not explicitly shown). The friction incurred between the manifold pin and push pin 201 contact surfaces stops push pin 201 from rotating. Referring to Figure 3, bearing upper plate 301 and bearing middle plate 302 with ball bearings 304 and 305 rotate together with coupling gear 205 (as shown in Figure 2) while lower plate 303 and the push pin 201 (as shown in Figure 2) are kept stationary with respect to the manifold pin when push pin 201 is in contact with the manifold pin.

With an aspect of the disclosure, push pin 201 is inserted to support plate 203 to position push pin 201.

With an aspect of the disclosure, coupling gear 205 may comprise a helical gear, spur gear, worm gear, bevel gear, and the like.

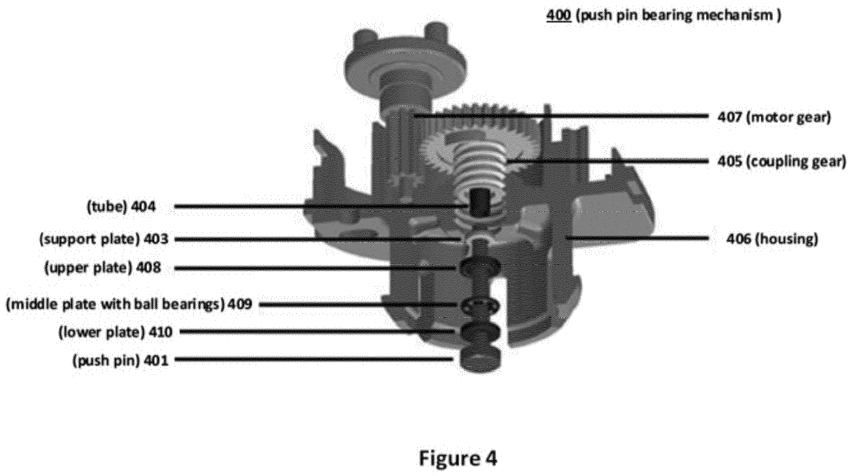

Figure 4 shows three-dimensional composite 400 of the push pin bearing mechanism shown in Figure 2 and Figure 3 according to one or more aspects of the disclosure. Support plate 403 and the ball bearing assembly (comprising upper plate 408, middle plate 409, and lower plate 410) are inserted to push pin 401. Push pin 401 is fixed onto the tube 404. Tube 404 is pressed fit onto helical gear 405. Helical gear 405 is screwed into housing 406 and motivated by motor gear 407 when motor gear 407 rotates.

When motor gear 407 is rotating either clockwise or anticlockwise, motor gear 407 provides a torque force to helical gear 405, causing helical gear 405 to rotate and at the same time transmitting the force and resulting in a vertical (linear) motion along the screw thread of housing 406. Helical gear 405 causes tube 404, support plate 403, ball bearing assembly, and push pin 401 to move up and down together. Tube 404, support plate 403, bearing upper plate 408, and bearing middle plate 409 (comprising a plurality of ball bearings) rotate together with helical gear 405 while lower plate 410 and push pin 401 are kept stationary by contact area friction among the manifold pin (not explicitly shown). Consequently, push pin 401 moves only vertically (linearly) in push pin bearing mechanism 400.

Because push pin 401 does not encounter rotational movement when in contact with the manifold pin, resulting erosion to the manifold pin may be ameliorated relative to traditional approaches.

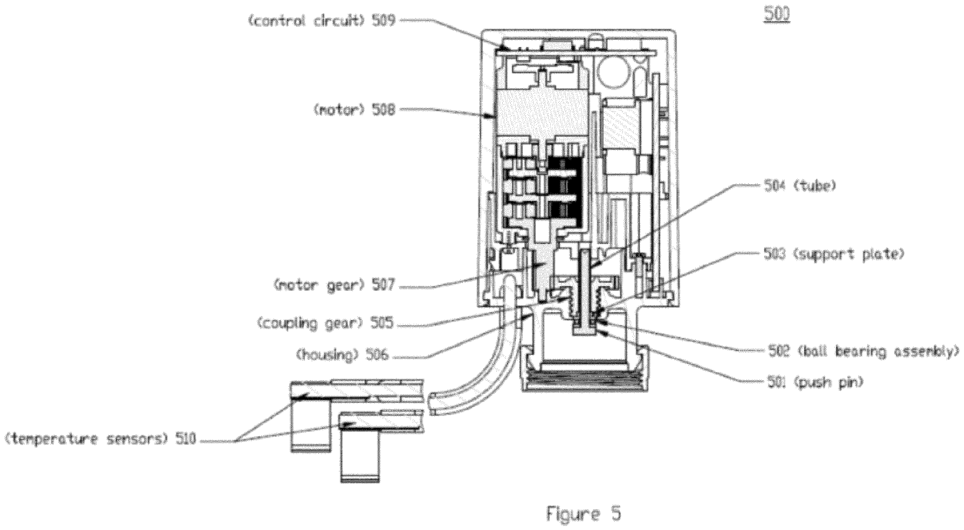

Figure 5 shows push pin bearing mechanism 500 used in an automatic temperature balanced actuator (ABA) application according to one or more aspects of the disclosure. Push pin bearing mechanism 500 of an ABA may be coupled to a manifold assembly (not explicitly shown) of a underfloor heating and/or cooling circuit. The ABA may include or may be connected to two temperature sensors 510, where the first and second temperature sensors 510 are located at emitter flow and return pipes, respectively, of the manifold assembly. Consequently, the ABA can determine the temperature differential and adjust the actuator position a constant temperature differential between the emitter flow and return pipes.

With some embodiments, a manifold assembly is the hub of a heating/cooling system that distributes water throughout a building. The manifold assembly provides a central place to connect both emitter flow (supply) and return lines. Supply water from the heat/cooling source enters the manifold assembly and circulates fluid (for example, hot water) throughout the system. Water flow through the manifold assembly is controlled by a manifold control mechanism that comprises a manifold pin and manifold valve. As discussed above, the manifold pin is driven by a push pin.

Referring to Figure 5, push pin bearing mechanism 500 comprises control circuit 509, which obtains an input signal that is indicative of a temperature differential and converts the input signal to the control signal for motor 508.

With some embodiments, an automatic temperature balanced actuator assembly includes a manifold assembly, where the manifold assembly comprises an emitter flow pipe and a return pipe for circulating fluid (for example, water). The actuator determines the differential temperature between the emitter flow pipe and the return pipe. The automatic temperature balanced actuator assembly may include first and second temperature sensors 510 located at the emitter flow pipe and the return pipe, respectively, where the temperature differential equals the difference between first and second temperature measurements obtained from the first and second temperature sensors 510, respectively.

Control circuit 509 drives motor 508 so that a rate of fluid flow through the manifold assembly is controlled by the position of a manifold valve based on the differential temperature.

When motor gear 507 is rotating either clockwise or anticlockwise as driven by motor 508, motor gear 507 provides a torque force to helical gear 505, causing helical gear 505 to rotate and at the same time transmitting the force and resulting in a vertical (linear) motion along the screw thread of housing 506.

Push pin 501 is inserted to support plate 503 to position push pin 501. While tube 504 is pressed fit onto helical gear 505, the fittings between tube 504 and push pin 501 and between ball bearing assembly 502 and push pin 501 allow for upward or downward movement (which may be referred as linear movement) of push pin 501 responsive to the rotation of coupling gear 505 (for example, a helical gear).

As previously discussed, ball bearing assembly 502 prevents rotational movement from being transferred to push pin 501 as soon as push pin 501 contacts the manifold pin (not explicitly shown). The friction incurred between the manifold pin and push pin 501 contact surfaces stops push pin 501 from rotating.

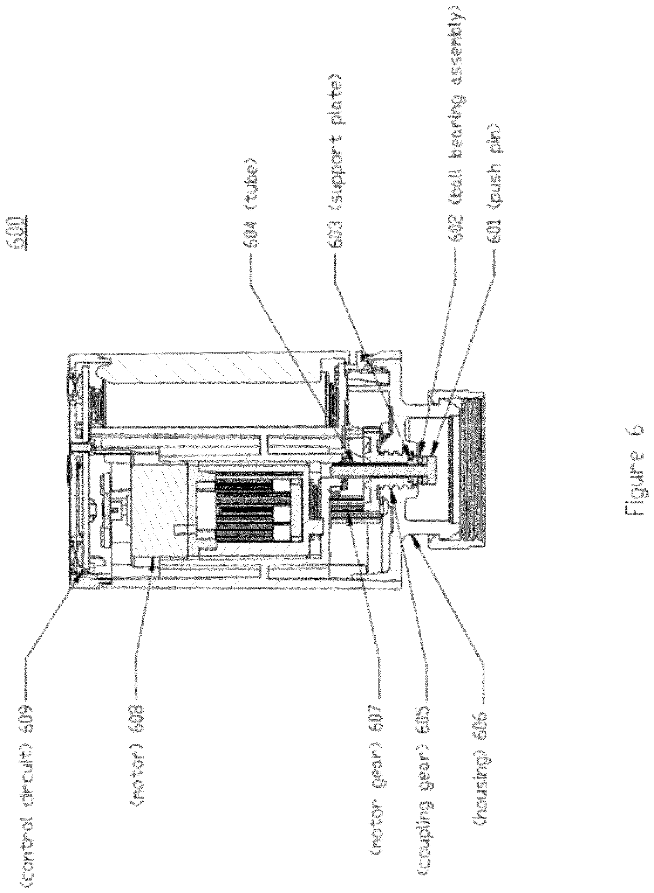

Figure 6 shows push pin bearing mechanism 600 used in a TRV application according to one or more aspects of the disclosure. Push pin bearing mechanism 600 may be coupled to a manifold assembly of a underfloor heating and/or cooling circuit. The TRV may include or may be connected to a temperature sensor that measures the temperature of a controlled environment. Consequently, the TRV controls the liquid flow (for example, water) between emitter flow and return pipes to achieve a desired temperature of the controlled environment.

With some embodiments, a manifold assembly is the hub of a heating/cooling system and distributes water throughout a building. The manifold assembly provides a central place to connect both emitter flow (supply) and return lines. Supply water from the heat/cooling source enters the manifold assembly and circulates fluid (for example, hot water) throughout the system. Water flow through the manifold assembly is controlled by a manifold control mechanism that comprises a manifold pin and manifold valve. As discussed above, the manifold pin is driven by a push pin.

Referring to Figure 6, push pin bearing mechanism 600 comprises control circuit 609, which obtains an input signal that is indicative of the measured environmental temperature and converts the input signal to the control signal for controlling motor 608.

With some embodiments, a thermostatic radiator valve assembly includes a manifold assembly, where the manifold assembly comprises an emitter flow pipe and a return pipe for circulating fluid (for example, water). Control circuit 609 drives motor 608 so that a rate of fluid flow through the manifold assembly is controlled by the position of a manifold valve based on the measured environmental temperature and a desired temperature.

When motor gear 607 is rotating either clockwise or anticlockwise as driven by motor 608, motor gear 607 provides a torque force to helical gear 605, causing helical gear 605 to rotate and at the same time transmitting the force and resulting in a vertical (linear) motion along the screw thread of housing 606.

Push pin 601 is inserted to support plate 603 to position push pin 601. While tube 604 is pressed fit onto helical gear 605, the fittings between tube 604 and push pin 601 and between ball bearing assembly 602 and push pin 601 allow for upward or downward movement (which may be referred as linear movement) of push pin 601 responsive to the rotation of coupling gear 605 (for example, a helical gear).

As previously discussed, ball bearing assembly 602 prevents rotational movement from being transferred to push pin 601 as soon as push pin 601 contacts the manifold pin (not explicitly shown). The friction incurred between the manifold pin and push pin 601 contact surfaces stops push pin 601 from rotating.

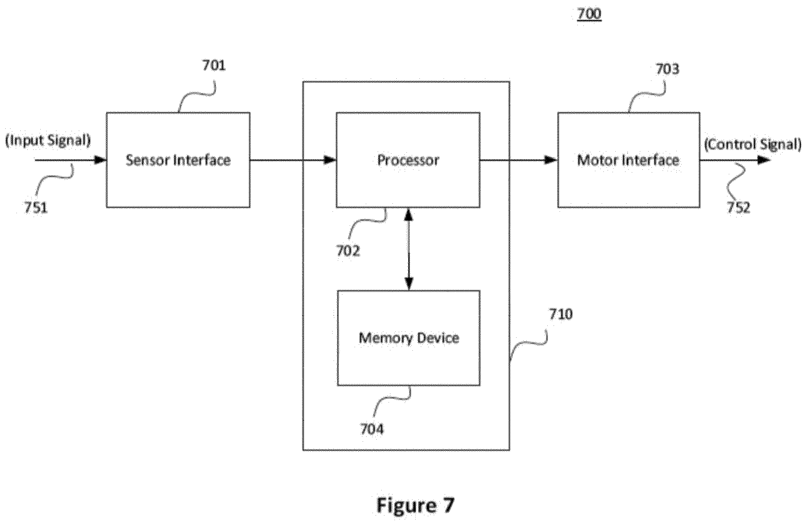

Figure 7 shows control circuit 700 for controlling a motor (for example, motor 508 or motor 608 in Figures 5 and 6) of a push pin bearing mechanism according to one or more aspects of the disclosure.

Control circuit 700 comprises sensor interface 701, computing device 710, and motor interface 703.

Sensor interface obtains input signal 751 from one or more temperature sensors 510 so that computing device 702 can control motor 508 or 608 by applying control signal 752 through motor interface 703.

Sensor interface 701 and motor interface 703 are typically in compliance with the electrical characteristics of the one or more temperature sensors 510 and motor 508,608, respectively.

With some embodiments, computing device 710 comprises processor 702 for controlling overall operation of the computing device 710 and its associated components, including memory device 704 (for example, RAM and ROM) .

Computing device 710 typically includes a variety of computer readable media. Computer readable media may be any available media that may be accessed by computing device 710 and include both volatile and nonvolatile media, removable and non-removable media. By way of example, and not limitation, computer readable media may comprise a combination of computer storage media and communication media.

Computer storage media include volatile and nonvolatile, removable and non-removable media implemented in any method or technology for storage of information such as computer readable instructions, data structures, program modules or other data. Computer storage media include, but is not limited to, random access memory (RAM), read only memory (ROM), electronically erasable programmable read only memory (EEPROM), flash memory or other memory technology, CD-ROM, digital versatile disks (DVD) or other optical disk storage, magnetic cassettes, magnetic tape, magnetic disk storage or other magnetic storage devices, or any other medium that can be used to store the desired information and that can be accessed by computing device 710.

Computer-executable instructions may be stored within memory device 704 and/or storage to provide instructions to processor 702 for enabling computing device 710 to perform various functions. Embodiments may include forms of computer-readable media. Computer-readable media include any available media that can be accessed by computing device 710. Computer-readable media may comprise storage media and communication media. Storage media include volatile and nonvolatile, removable and non-removable media implemented in any method or technology for storage of information such as computer-readable instructions, object code, data structures, program modules, or other data. Communication media include any information delivery media and typically embody data in a modulated data signal such as a carrier wave or other transport mechanism.

Aspects of the invention have been described in terms of illustrative embodiments thereof. Numerous other embodiments, modifications and variations are possible within the scope as defined in the claims. For example, one of ordinary skill in the art will appreciate that the steps illustrated in the illustrative figures may be performed in other than the recited order, and that one or more steps illustrated may be optional in accordance with aspects of the disclosure.

## Claims

1. A push pin bearing mechanism (200, 400) comprising:
a housing (206, 406, 506, 606);
a motor gear (207, 407, 507, 607) capable of providing a rotation movement;
a coupling gear (205, 405, 505, 605) comprising a helical gear, screwed into the housing (206, 406, 506, 606) and coupled to the motor gear (207, 407, 507, 607) in order to transfer the rotational movement from the motor gear (207, 407, 507, 607) to the coupling gear (205, 405, 505, 605);
a bearing assembly (202, 502, 602;
a tube (204, 404, 504, 604) pressed fixed onto the coupling gear (205, 405, 505, 605);
a push pin (201, 401, 5011, 601) inserted to the bearing assembly (202, 402, 502, 602) and fixed onto the tube (204, 404, 504, 604), the push pin (201, 401, 501, 601) moving in a linear direction responsive to the rotational movement of the coupling gear (205, 405, 505, 605) and capable of being in contact with a manifold pin; and
the bearing assembly (202, 402, 502, 602) preventing the rotational movement from being transferred to the push pin (201, 401, 5011, 601) when the push pin is in contact with the manifold pin;
**characterized in that** the bearing assembly comprises:
an upper plate (301, 408);
a lower plate (303, 410);
a middle plate (302, 409) situated between the upper plate (301, 408) and the lower plate (303, 410) and retaining a plurality of bearings, preferably comprising ball bearings (304); and
the upper plate (301, 408) and the middle plate (302, 409) capable of rotating with the coupling gear (205, 405, 505, 605) while the lower plate (303, 410) and the push pin (201, 401, 501, 601) are stationary with respect to the manifold pin when the push pin (201, 401, 501, 601) and the manifold pin are in contact with each other.

2. The apparatus of claim 1 further comprising:
a support plate (203); and
the push pin (201) inserted to the support plate (203).

3. The apparatus of claims 1-2, wherein the middle plate (302) comprises a bearing retainer integral or fastened to the middle plate and wherein the bearing retainer retains the plurality of bearings.

4. A thermostatic radiator valve (TRV) assembly comprising:
a motor (608) responsive to a control signal initiating motor movement, wherein the control signal is indicative of a temperature measurement;
a push pin bearing mechanism according to claim 1 .

5. The thermostatic radiator valve assembly of claim 4 further comprising:
a manifold control mechanism comprising:
the manifold pin; and
a manifold valve, wherein the manifold valve is positioned in response to linear movement of the push pin (601).

6. The thermostatic radiator valve assembly of claim 5 further comprising:
a manifold assembly, wherein a rate of fluid flow through the manifold assembly is controlled by the position of the manifold valve.

7. The thermostatic radiator valve assembly of claim 4 further comprising:
a support plate (603); and
the push pin (601) inserted to the support plate (603).

8. The thermostatic radiator valve assembly of claim 4, further comprising a control circuit, wherein the control circuit obtains an input signal indicative of the temperature measurement and converts the input signal to the control signal.

9. An automatic temperature balanced actuator (ABA) assembly comprising:
a motor (508) responsive to a control signal that initiates motor movement, wherein the control signal is responsive to a differential temperature;
a push pin bearing mechanism according to claim 1.

10. The automatic temperature balanced actuator assembly of claim 9, further comprising:
a manifold control mechanism comprising:
the manifold pin; and
a manifold valve, wherein the manifold valve is positioned in response to linear movement of the push pin.

11. The automatic temperature balanced actuator assembly of claim 9, further comprising:
a manifold assembly, the manifold assembly comprising an emitter flow pipe and a return pipe, wherein the control signal is indicative of the differential temperature between the emitter flow pipe and the return pipe and wherein a rate of fluid flow through the manifold assembly is controlled by the position of the manifold valve based on the differential temperature.

12. The automatic temperature balanced actuator assembly of claim 9 further comprising a first and second temperature sensors located at the emitter flow pipe and the return pipe, respectively, wherein the temperature differential essentially equals a difference between first and second temperature measurements obtained from the first and second temperature sensors, respectively.

13. The automatic temperature balanced actuator assembly of claim 9 further comprising:
a support plate (503); and
the push pin (501) inserted to the support plate (503).

14. The automatic temperature balanced actuator assembly of claim 9 further comprising a control circuit, wherein the control circuit obtains an input signal indicative of the temperature differential and converts the input signal to the control signal.

## Patentansprüche

1. Druckstiftlagermechanismus (200, 400), aufweisend:
ein Gehäuse (206, 406, 506, 606);
ein Antriebsritzel (207, 407, 507, 607), das zur Erzeugung einer Drehbewegung eingerichtet ist;
ein in das Gehäuse (206, 406, 506, 606) geschraubtes und mit dem Antriebsritzel (207, 407, 507, 607) gekoppeltes Kupplungsrad (205, 405, 505, 605) mit einem schrägverzahnten Zahnrad, zur Übertragung der Drehbewegung von dem Motorzahnrad (207, 407, 507, 607) auf das Kupplungsrad (205, 405, 505, 605);
eine Lageranordnung (202, 502, 602);
ein Rohr (204, 404, 504, 604), das auf das Kupplungsrad (205, 405, 505, 605) gepresst ist;
einen Druckstift (201, 401, 5011, 601), der in die Lageranordnung (202, 402, 502, 602) eingesetzt und an dem Rohr (204, 404, 504, 604) befestigt ist,
wobei der Druckstift (201, 401, 501, 601) in einer linearen Richtung in Reaktion auf die Drehbewegung des Kupplungsrads (205, 405, 505, 605) beweglich ist und in der Lage ist, einen Verteilerstift zu kontaktieren; und
die Lageranordnung (202, 402, 502, 602) verhindert, dass die Drehbewegung auf den Druckstift (201, 401, 5011, 601) übertragen wird, wenn der Druckstift in Kontakt mit dem Verteilerstift steht;
**dadurch gekennzeichnet, dass** die Lageranordnung aufweist:
eine obere Platte (301, 408);
eine untere Platte (303, 410);
eine mittlere Platte (302, 409), die zwischen der oberen Platte (301, 408) und der unteren Platte (303, 410) angeordnet ist und eine Vielzahl von Lagerelementen, vorzugsweise Kugellager (304), aufnimmt; und
die obere Platte (301, 408) und die mittlere Platte (302, 409) in der Lage sind, sich mit dem Kupplungsrad (205, 405, 505, 605) zu drehen, während die untere Platte (303, 410) und der Druckstift (201, 401, 501, 601) relativ zu dem Verteilerstift feststehend sind, wenn der Druckstift (201, 401, 501, 601) und der Verteilerstift miteinander in Kontakt stehen.

2. Vorrichtung nach Anspruch 1, die zusätzlich aufweist:
eine Trägerplatte (203); wobei
der Druckstift (201) in die Trägerplatte (203) eingesetzt ist.

3. Vorrichtung nach Anspruch 1-2, wobei die mittlere Platte (302) einen einstückig mit der mittleren Platte ausgebildeten oder an ihr befestigten Lagerträger aufweist, und wobei der Lagerträger die Mehrzahl der Lagerelemente hält.

4. Thermostatisches Heizkörperventil (TRV), aufweisend:
einen Motor (608), der auf ein, eine Motorbewegung auslösendes Steuersignal anspricht, wobei das Steuersignal von einer Temperaturmessung indiziert ist;
einen Druckstiftlagermechanismus gemäß Anspruch 1.

5. Thermostatisches Heizkörperventil (TRV) nach Anspruch 4, das zusätzlich aufweist:
einen Verteilersteuermechanismus mit:
dem Verteilerstift; und
ein Verteilerventil, wobei das Verteilerventil in Reaktion auf eine lineare Bewegung des Druckstifts (601) gestellt wird.

6. Thermostatisches Heizkörperventil (TRV) nach Anspruch 5, das zusätzlich aufweist:
eine Verteilerbaugruppe, wobei eine Fluiddurchflussrate durch die Verteilerbaugruppe durch die Position des Verteilerventils gesteuert wird.

7. Thermostatisches Heizkörperventil (TRV) nach Anspruch 4, das zusätzlich aufweist:
eine Trägerplatte (603); und
den in die Trägerplatte (603) eingesetzten Druckstift (601).

8. Thermostatisches Heizkörperventil (TRV) nach Anspruch 4, das zusätzlich eine Steuerschaltung aufweist, wobei die Steuerschaltung ein von einer Temperaturmessung indiziertes Eingangssignal erhält und das Eingangssignal in das Steuersignal konvertiert.

9. Automatisch temperaturausgeglichene Stellgliedanordnung (ABA) aufweisend:
einen Motor (508), der auf ein Steuersignal anspricht, das die Motorbewegung initiiert, wobei das Steuersignal auf eine Differenztemperatur anspricht;
einen Druckstiftlagermechanismus nach Anspruch 1.

10. Automatisch temperaturausgeglichene Stellgliedanordnung (ABA) nach Anspruch 9, die zusätzlich aufweist:
einen Verteilersteuermechanismus, umfassend:
den Verteilerstift; und
ein Verteilerventil,
wobei das Verteilerventil in Abhängigkeit von der linearen Bewegung des Druckstiftes gestellt wird.

11. Automatisch temperaturausgeglichene Stellgliedanordnung nach Anspruch 9, die zusätzlich aufweist:
eine Verteilerbaugruppe, wobei die Verteilerbaugruppe eine Vorlaufleitung und eine Rücklaufleitung umfasst, wobei das Steuersignal die Differenztemperatur zwischen der Vorlaufleitung und der Rücklaufleitung darstellt und wobei eine Fluidströmungsrate durch die Verteilerbaugruppe durch die Position des Verteilerventils auf der Grundlage der Differenztemperatur gesteuert wird.

12. Automatisch temperaturausgeglichene Stellgliedanordnung nach Anspruch 9, die zusätzlich einen ersten und einen zweiten Temperatursensor aufweist, die sich an der Vorlaufleitung bzw. an der Rücklaufleitung befinden, wobei die Temperaturdifferenz im Wesentlichen einer Differenz zwischen der ersten und der zweiten Temperaturmessung entspricht, die von dem ersten bzw. dem zweiten Temperatursensor ermittelt wird.

13. Automatisch temperaturausgeglichene Stellgliedanordnung nach Anspruch 9, die zusätzlich aufweist:
eine Trägerplatte (503); und
den Druckstift (501), der in die Trägerplatte (503) eingesetzt ist.

14. Automatisch temperaturausgeglichene Stellgliedanordnung nach Anspruch 9, die zusätzlich eine Steuerschaltung aufweist, wobei die Steuerschaltung ein der Temperaturdifferenz entsprechendes Eingangssignal erhält und das Eingangssignal in das Steuersignal konvertiert.

## Revendications

1. Mécanisme de palier de broche de poussée (200, 400) comprenant :
un logement (206, 406, 506, 606) ;
un engrenage moteur (207, 407, 507, 607) apte à fournir un mouvement de rotation ;
un engrenage d'accouplement (205, 405, 505, 605) comprenant un engrenage hélicoïdal, vissé dans le logement (206, 406, 506, 606) et accouplé à l'engrenage moteur (207, 407, 507, 607) pour transférer le mouvement de rotation de l'engrenage moteur (207, 407, 507, 607) à l'engrenage d'accouplement (205, 405, 505, 605) ;
un ensemble palier (202, 502, 602) ;
un tube (204, 404, 504, 604) fixé par pression sur l'engrenage d'accouplement (205, 405, 505, 605) ;
une broche de poussée (201, 401, 5011, 601) insérée dans l'ensemble palier (202, 402, 502, 602) et fixée sur le tube (204, 404, 504, 604), la broche de poussée (201, 401, 501, 601) se déplaçant dans une direction linéaire en réponse au mouvement de rotation de l'engrenage d'accouplement (205, 405, 505, 605) et capable d'être en contact avec une broche de collecteur ; et
l'ensemble palier (202, 402, 502, 602) empêchant le mouvement de rotation d'être transféré à la broche de poussée (201, 401, 5011, 601) lorsque la broche de poussée est en contact avec la broche de collecteur ;
**caractérisé en ce que** l'ensemble palier comprend :
une plaque supérieure (301, 408) ;
une plaque inférieure (303, 410) ;
une plaque médiane (302, 409) située entre la plaque supérieure (301, 408) et la plaque inférieure (303, 410) et retenant une pluralité de paliers, comprenant de préférence des paliers à billes (304) ; et
la plaque supérieure (301, 408) et la plaque médiane (302, 409) pouvant tourner avec l'engrenage d'accouplement (205, 405, 505, 605) tandis que la plaque inférieure (303, 410) et la broche de poussée (201, 401, 501, 601) sont fixes par rapport à la broche de collecteur lorsque la broche de poussée (201, 401, 501, 601) et la broche de collecteur sont en contact l'une avec l'autre.

2. Appareil selon la revendication 1, comprenant en outre :
une plaque de support (203) ; et
la broche de poussée (201) insérée dans la plaque de support (203).

3. Appareil selon les revendications 1 et 2, dans lequel la plaque médiane (302) comprend un dispositif de retenue de palier intégré ou fixé à la plaque médiane et dans lequel le dispositif de retenue de palier retient la pluralité de paliers.

4. Ensemble vanne de radiateur thermostatique (TRV) comprenant :
un moteur (608) sensible à un signal de commande initiant le mouvement du moteur, dans lequel le signal de commande est indicatif d'une mesure de température ;
un mécanisme de palier de broche de poussée selon la revendication 1.

5. Ensemble vanne de radiateur thermostatique selon la revendication 4, comprenant en outre :
un mécanisme de commande de collecteur comprenant :
la broche de collecteur ; et
une vanne de collecteur, dans laquelle la vanne de collecteur est positionnée en réponse au mouvement linéaire de la broche de poussée (601).

6. Ensemble vanne de radiateur thermostatique selon la revendication 5, comprenant en outre :
un ensemble collecteur, dans lequel un débit de fluide à travers l'ensemble collecteur est commandé par la position de la vanne de collecteur.

7. Ensemble vanne de radiateur thermostatique selon la revendication 4, comprenant en outre :
une plaque de support (603) ; et
la broche de poussée (601) insérée dans la plaque de support (603).

8. Ensemble vanne de radiateur thermostatique selon la revendication 4, comprenant en outre un circuit de commande, dans lequel le circuit de commande obtient un signal d'entrée indicatif de la mesure de température et convertit le signal d'entrée en signal de commande.

9. Ensemble actionneur automatique à température équilibrée (ABA) comprenant :
un moteur (508) sensible à un signal de commande qui initie le mouvement du moteur, dans lequel le signal de commande est sensible à une température différentielle ;
un mécanisme de palier de broche de poussée selon la revendication 1.

10. Ensemble actionneur automatique à température équilibrée selon la revendication 9, comprenant en outre :
un mécanisme de commande de collecteur comprenant :
la broche de collecteur ; et
une vanne de collecteur, dans laquelle la vanne de collecteur est positionnée en réponse au mouvement linéaire de la broche de poussée.

11. Ensemble actionneur automatique à température équilibrée selon la revendication 9, comprenant en outre :
un ensemble collecteur, l'ensemble collecteur comprenant un tuyau d'écoulement émetteur et un tuyau de retour, dans lequel le signal de commande est indicatif de la température différentielle entre le tuyau d'écoulement émetteur et le tuyau de retour et dans lequel un débit de fluide à travers l'ensemble collecteur est commandé par la position de la vanne du collecteur en fonction de la température différentielle.

12. Ensemble actionneur automatique à température équilibrée selon la revendication 9, comprenant en outre un premier et un second capteur de température situés au niveau du tuyau d'écoulement émetteur et du tuyau de retour, respectivement, dans lequel le différentiel de température est essentiellement égal à une différence entre les première et seconde mesures de température obtenues à partir des premier et second capteurs de température, respectivement.

13. Ensemble actionneur automatique à température équilibrée selon la revendication 9, comprenant en outre :
une plaque de support (503) ; et
la broche de poussée (501) insérée dans la plaque de support (503).

14. Ensemble actionneur automatique à température équilibrée selon la revendication 9, comprenant en outre un circuit de commande, dans lequel le circuit de commande obtient un signal d'entrée indicatif du différentiel de température et convertit le signal d'entrée en signal de commande.
